# EUROPEAN PATENT APPLICATION

(11) **EP 2 696 292 A1**
(43) Date of publication of application: **12.02.2014**
(21) Application number: 13154215.1
(22) Date of filing: 06.02.2013
(51) Int. Cl.: G06F 13/38, G06F 13/42, G06F 1/16

(54) **Expansion module**

(30) Priority: 08.08.2012 TW 101128630
(71) Applicant: Acer Incorporated, New Taipei City 221 (TW)
(72) Inventor: Yeung, Sip Kim, 221 New Taipei City (TW)
(74) Representative: Becker Kurig Straus

(57) **Abstract**

An expansion module including a first expansion device and at least one second expansion device is provided. The first expansion device includes a first expansion bus interface, a second expansion bus interface and at least one first peripheral device. The first expansion device is coupled to a mobile electronic device via the first expansion bus interface. The first expansion bus interface provides the first peripheral device to the mobile electronic device for use. Each of the second expansion devices includes a third expansion bus interface and at least one second peripheral device. The second peripheral device is coupled to the third expansion bus interface and coupled to the second expansion bus interface in a daisy chain via the third expansion bus interface. The first expansion bus interface and the second expansion bus interface provide the second peripheral device to the mobile electronic device via the third expansion bus interface.

## Description

### CROSS-REFERENCE TO RELATED APPLICATION

This application claims the priority benefit of Taiwan application serial no. 101128630, filed on August 8, 2012. The entirety of the above-mentioned patent application is hereby incorporated by reference herein and made a part of this specification.

### BACKGROUND OF THE INVENTION

### FIELD OF THE INVENTION

The invention relates to an expansion module, and more specifically, the invention relates to an expansion module capable of converting to various expansion bus standards.

### Description of Related Art

With the rapid advancement of the technology, computers provide a plurality of functions. Various types of peripheral devices continue burgeoning. In order to enhance computer performance or expand computer functions for a user, expansion bus slots such as an accelerated graphics port (AGP), a peripheral component interconnect (PCI) and a PCI Express (PCI-E) are usually disposed on a main board of a computer for a user to plug in expansion cards such as display cards, sound cards and network cards. In addition, expansion bus interfaces such as Firewire and Universal Serial Bus (USB) are also disposed on a main board of a computer for a user to connect to peripheral devices such as a hard disk and a printer.

With regard to mobile electronic devices such as notebook computers or tablet computers, a type of externally connected expansion device such as a docking station for a notebook computer is invented with the currently-adopted technology to enhance convenience and mobility of a mobile electronic device such that a host system may be invented and designed toward a trend of lightweight. An expansion device containing peripheral devices and expansion cards within the device can provide functions of the peripheral devices and expansion cards to a mobile electronic device for use.

However, with regard to designing expansion bus interfaces of expansion devices, costs of expansion devices, as a whole, will be increased with expansion bus interfaces providing faster transmission rates, and expansion devices may not support peripheral devices requiring higher data transmission rate with expansion bus interfaces providing slower transmission rates. As a result, production costs and product efficiency of these types of expansion devices cannot be taken into account when choosing to design such expansion devices.

### SUMMARY OF THE INVENTION

The invention provides an expansion module providing various types of peripheral devices to a mobile electronic device for use by using various expansion bus standards.

The invention provides an expansion module used to provide expansion functions to a mobile electronic device. The expansion module includes a first expansion device and at least one second expansion device. The first expansion device includes a first expansion bus interface, a second expansion bus interface and at least one first peripheral device. The second expansion bus interface and the first peripheral device are coupled to the first expansion bus interface. The first expansion device is coupled to a mobile electronic device via the first expansion bus interface. The first expansion bus interface provides the first peripheral device to the mobile electronic device for use. Each of the second expansion devices includes a third expansion bus interface and at least one second peripheral device. The second peripheral device is coupled to the third expansion bus interface. The second expansion device is coupled to the second bus interface of the first expansion device in a daisy chain via the third expansion bus interface. The first expansion bus interface and the second expansion bus interface provide the second peripheral device to the mobile electronic device for use via the third expansion bus interface.

In one embodiment of the invention, a first expansion bus interface and a mobile electronic device use a first expansion bus standard to exchange signals. The first expansion bus interface and a second expansion bus interface use a second expansion bus standard to exchange signals. The second expansion bus interface and the third expansion bus interface use a third expansion bus standard to exchange signals, and a transmission rate of the first expansion bus standard is faster than a transmission rate of the third expansion bus standard.

In one embodiment of the invention, each of second expansion devices further includes a fourth expansion bus interface and at least one third peripheral device. The third peripheral device is coupled to the fourth expansion bus interface. The fourth expansion bus interface is coupled to a general purpose input/output (GPIO) port of a first expansion bus interface of a first expansion device. The first expansion bus interface provides the third peripheral device to a mobile electronic device for use via the fourth expansion bus interface.

In one embodiment of the invention, a part of wires of the third expansion bus standard is used to exchange signals between the first expansion bus interface and the fourth expansion bus interface. The part of the wires is not used between the second expansion bus interface and the third expansion bus interface. The first expansion device and the second expansion device are coupled by connectors conforming to the third expansion bus standard.

In one embodiment of the invention, the part of the wires is a single wire in the third expansion bus standard. A one-wire communication protocol is used on the single wire to exchange signals between the first expansion bus interface and the fourth expansion bus interfaces.

In one embodiment of the invention, the single wire is a power wire in the third expansion bus standard.

In one embodiment of the invention, the third peripheral device of each of second expansion devices includes a transmission cue device. When one of the second expansion devices and a mobile electronic device process signal transmissions, the mobile electronic device issues a transmission cue by controlling the transmission cue device of the second expansion device so as to cue a user that the mobile electronic device is controlling the second expansion device.

In one embodiment of the invention, when a mobile electronic device reads data from a second peripheral device of a second expansion device, or when the mobile electronic device writes data to the second peripheral device of the second expansion device, signal transmission occurs. The mobile electronic device controls a transmission cue device to stop issuing the transmission cue after the mobile electronic device finishes reading or writing the data.

In one embodiment of the invention, when a transmission cue device of a second expansion device receives a remove command, the mobile electronic device performs a stop action to the second expansion device and the other second expansion devices whose coupling orders are after that of the second expansion device based on the remove command. The aforementioned signal transmissions occur when the stop action is performed. The mobile electronic device controls the transmission cue device to stop issuing the transmission cue after the stop action is completed.

In light of the foregoing, the expansion module of the present embodiments of the invention can use various expansion bus standards to exchange signals among a plurality of the expansion devices so as to use various expansion bus interfaces to provide corresponding peripheral devices to mobile electronic devices for use based on data transmission requirements of the peripheral devices and thereby reduce costs as a whole.

In order to make the aforementioned features and advantages of the invention more comprehensible, several embodiments accompanied with figures are described in detail below.

### BRIEF DESCRIPTION OF THE DRAWINGS

FIG. 1 is a schematic view of an expansion module according to one embodiment of the invention.

FIG. 2 is a schematic view of an expansion module according to another embodiment of the invention.

### DESCRIPTION OF EMBODIMENTS

One embodiment of the invention provides an expansion module using various expansion bus standards to exchange signals among a plurality of expansion devices so as to use various expansion bus interfaces to provide corresponding peripheral devices to mobile electronic devices for use based on data transmission requirements of the peripheral devices and thereby reduce costs as a whole. In order to make the invention more comprehensible, several embodiments are described below as the examples to prove that the invention can actually be realized. In addition, whenever possible, identical or similar reference numbers/components/steps stand for identical or similar elements in the figures and the description of embodiments.

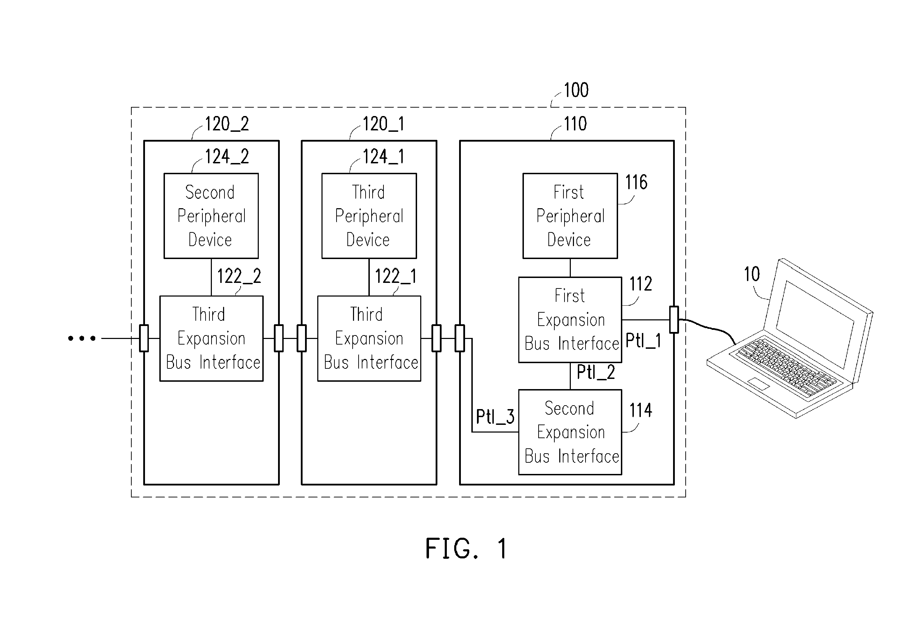

FIG. 1 is a schematic view of an expansion module according to one embodiment of the invention. In the present embodiment, an expansion module 100 provides expansion functions to a mobile electronic device 10, wherein the mobile electronic device 10 can be a mobile electronic device such as a notebook computer, an ultrabook computer, a tablet computer, a personal digital assistant (PDA) or a smart phone. The expansion module 100 can be designed in a shape of a docking station or other forms, but the invention is not limited thereto.

Referring to FIG. 1. The expansion module 100 includes a first expansion device and at least one second expansion device. Herewith, second expansion devices 120_1 and 120_2 are taken as examples. A first expansion device 110 includes a first expansion bus interface 112, a second expansion bus interface 114 and at least one first peripheral device. Herewith, a first peripheral device 116 is taken as an example.

The second expansion bus interface 114 and the first peripheral device 116 are both coupled to the first expansion bus interface 112. The first expansion device 110 is coupled to the mobile electronic device 10 via the first expansion bus interface 112. The first expansion bus interface 112 provides the first peripheral device 116 to the mobile electronic device 10 for use.

A second expansion device 120_1 includes a third expansion bus interface 122_1 and at least one second peripheral device. Herewith, a second peripheral device 124_1 is taken as an example. Similarly, the second expansion device 120_2 also includes a third expansion bus interface 122_2 and at least one second peripheral device. Herewith, a second peripheral device 124_2 is taken as an example.

The second peripheral devices 124_1 and 124_2 are coupled, respectively, to the third expansion bus interfaces 122_1 and 122_2, and the second expansion devices 120_1 and 120_2 are coupled to the second expansion bus interface 114 of the first expansion device 110 in a daisy chain via the third expansion bus interfaces 122_1 and 122_2, such that the first expansion bus interface 112 and the second expansion bus interface 114 provide the second peripheral devices 124_1 and 124_2 to the mobile electronic device 10 for use via the third expansion bus interfaces 122_1 and 122_2.

The first expansion bus interface 112 and the mobile electronic device 10 use a first expansion bus standard Pt1_1 to exchange signals. The first expansion bus interface 112 and the second expansion bus interface 114 use a second expansion bus standard Ptl_2 to exchange signals, and the second expansion bus interface 114 and the third expansion bus interfaces 122_1 and 122_2 use a third expansion bus standard Pt1_3 to exchange signals, wherein a transmission rate of the first expansion bus standard Pt1_1 is faster than the transmission rate of the third expansion bus standard Pt1_3.

In the present embodiment, the first expansion bus interface 112 is, for example, a Thunderbolt controller. The second expansion bus interface 114 is, for example, a Universal Serial Bus root port (USB root port). The third expansion bus interfaces 122_1 and 122_2 are, for example, Universal Serial Bus (USB) hubs. Among them, the first expansion bus standard Pt1_1 is, for example, a Thunderbolt having a transmission rate up to 20Gbps. The second expansion bus standard Pt1_2 is, for example, a Peripheral Component Interconnect (PCI), and the third expansion bus standard Pt1_3 is, for example, a Universal Serial Bus (USB). Take a USB 3.0 interface as an example, a transmission rate of a USB 3.0 interface is approximately 5Gbps.

It should be noted that the second expansion bus standard Pt1_2 and the first expansion bus standard Pt1_1 can be the same expansion bus standard, that is, the expansion module 100 performs conversions between the first expansion bus standard Pt1_1 and the third expansion bus standard Pt1_3 in the second expansion bus interface 114. Or, the second expansion bus standard Pt1_2 and the third expansion bus standard Pt1_3 can be the same expansion bus standard, that is, the expansion module 100 performs conversions between the first expansion bus standard Pt1_1 and the third expansion bus standard Pt1_3 in the first expansion bus interface 112. Furthermore, the first expansion bus standard Pt1_1, the second expansion bus standard Pt1_2 and the third expansion bus standard Pt1_3 can also be different expansion bus standards among them. Therefore, the first expansion bus interface 112 and the second expansion bus interface 114 perform, respectively, corresponding signal conversions, but the invention is not limited thereto.

Specifically, even though the first expansion bus interface 112 similar to a Thunderbolt controller and the like has faster transmission rate, designing and fabricating costs of the first expansion bus interface 112 are higher. If the first expansion bus interface 112 having a higher transmission rate is also used for the second expansion devices 120_1 and 120_2 for the purpose of enhancing transmission efficiency, it would be difficult to lower selling prices of the expansion module 100. Market competitiveness of the expansion module 100 would be lower.

In addition, when it comes to peripheral devices such as universal card readers or CD-ROM drivers, transmissions can be performed normally by using an USB interface such that the mobile electronic device uses expansion functions of the peripheral devices. In other words, since amount of data transmission of universal peripheral devices are lower, whether to provide expansion bus interfaces having faster transmission rate does not make any difference to universal peripheral devices.

In order for the expansion module 100 to use expansion bus interfaces having different transmission rates to control various types of peripheral devices, respectively, so as to provide faster expansion bus interfaces to peripheral devices having higher transmission requirements. Therefore, in the first expansion device 110, the first expansion bus interface 112 and the second expansion bus interface 114 converts interchangeably the passing signals between the first expansion bus standard Pt1_1 and the third expansion bus standard Pt1_3, such that the first peripheral device 116 and the second peripheral devices 124_1 and 124_2 can use, respectively, signals that conform to the first expansion bus standard Pt1_1 and the second expansion bus standard Pt1_2 to perform transmissions so as to provide expansion functions to the mobile electronic device 10 for use.

For example, the mobile electronic device 10 can perform exchanging signals with the first peripheral device 116 through the first expansion bus standard Pt1_1 having a faster transmission rate, such that the mobile electronic device 10 uses expansion functions of the first peripheral device 116. In addition, when it comes to universal peripheral devices such as the second peripheral devices 124_1 and 124_2, signal conversions can be processed between the first expansion bus standard Pt1_1 and the third expansion bus standard Pt1_3 via the first expansion bus interface 112 and the second expansion bus interface 114, and signal exchanges can be processed with the second peripheral devices 124_1 and 124_2 using the third expansion standard Pt1_3, such that the mobile electronic device 10 uses expansion functions of the second peripheral devices 124_1 and 124_2. Among them, the first peripheral device 116 is a peripheral device such as a Graphics Processing Unit (GPU) or a Video card having higher transmission requirements, and each of the second peripheral devices 124_1 and 124_2 are peripheral devices such as hard disk drives (HDD), optical disk drives (ODD) or card readers, but the invention is not limited thereto.

Furthermore, although the present embodiment takes an example that the first expansion device 110 and the second expansion devices 120_1 and 120_2 include, respectively, a peripheral device, but in the other embodiment, the first expansion device and each of the second expansion devices all include a plurality of peripheral devices that are provided to the mobile electronic device to use. The invention is not limited thereto.

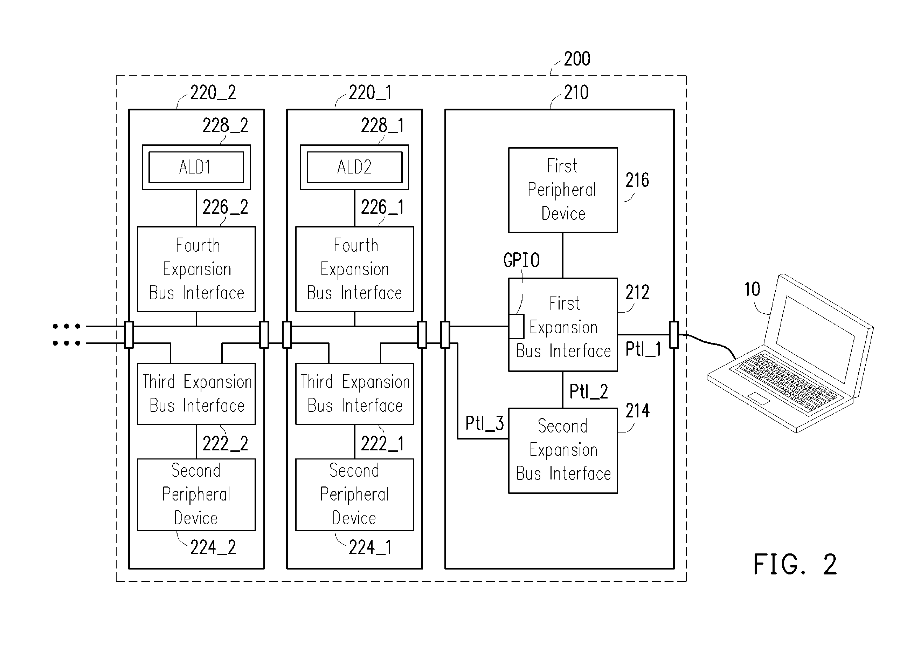

FIG. 2 is a schematic view of an expansion module according to another embodiment of the invention. In the present embodiment, the expansion module 200 includes a first expansion device 210 and at least one second expansion device. Herewith, second expansion devices 220_1 and 220_2 are taken as an example.

Referring to FIG. 2. In the present embodiment, the second expansion device 220_1 further includes a fourth expansion bus interface 226_1 and at least one third peripheral device. Herewith, a third peripheral device 228_1 is taken as an example. Similarly, the second expansion device 220_2 further includes a fourth expansion bus interface 226_2 and at least one third expansion device. Herewith, a third peripheral device 228_2 is taken as an example.

The third peripheral devices 228_1 and 228_2 are, respectively, coupled to the fourth expansion bus interfaces 226_1 and 226_2, and the fourth expansion bus interfaces 226_1 and 226_2 are coupled to a general purpose input/output (GPIO) port of a first expansion bus interface 212 of the first expansion device 210. Among them, the first expansion bus interface 212 provides, respectively, the third peripheral devices 228_1 and 228_2 to the mobile electronic device 10 for use via the fourth expansion bus interfaces 226_1 1 and 226_2.

Specifically, in the present embodiment, in order to further increase functions of the expansion module 200 and to comply with the original third expansion bus standard Pt1_3, a part of the wires of the original third expansion bus standard is used to exchange signals between the fourth expansion bus interfaces 226_1 and 226_2 and the first expansion bus interface 212 in each of the second expansion devices 220_1 and 220_2, and the part of the wires is not used for signal exchange between a second expansion bus interface 214 and the third expansion bus interfaces 222_1 and 222_2. Therefore, the part of the wires used by the fourth expansion bus interfaces 226_1 and 226_2 do not have effects on signal transmissions of the third expansion bus standard Pt1_3. The third expansion bus interfaces 222_1 and 222_2 and the second expansion bus interface 214 can still process signal exchanges via the third expansion bus standard Pt1_3. In other words, the wires not used by the fourth expansion bus interfaces 226_1 and 226_2 are used to transmit signals between the second expansion bus interface 214 and the third expansion bus interfaces 222_1 and 222_2.

In addition, since only a part of the wires of the third expansion bus standard is used as transmission wires of the fourth expansion bus interfaces 226_1 and 226_2 without increasing extra wires, the first expansion device 210 and the second expansion devices 220_1 and 220_2 can still couple to each other via connectors P1 and P2 conforming to the third expansion bus standard Pt1_3.

The first expansion bus interface 212 uses a general purpose input/output (GPIO) port as a bridge between the fourth expansion bus interfaces 226_1 and 226_2 and the mobile electronic device 10. As a result, the mobile electronic device 10 can individually exchange signals through a GPIO port of the first expansion bus interface 212 and each of the fourth expansion bus interfaces 226_1 and 226_2 so as to use expansion functions of the third peripheral devices 228_1 and 228_2.

Accordingly, in the present embodiment, the connectors P1 and P2 are not modified. The method only uses a part of the wires of the third expansion bus standard Pt1_3 to fulfill applications using two different signal transmission standards in terms of controlling and using various types of peripheral devices in the same second expansion devices 220_1 and 220_2.

In a general USB standard, signals are transmitted using, respectively, a power wire, a plurality of data lines and a ground wire. However, in the present embodiment, since the second expansion devices 220_1 and 220_2 have independent power inputs, the second expansion devices 220_1 and 220_2 do not need the power provided by the mobile electronic device 10. Therefore, when using the third expansion bus standard Pt1_3 to process signal exchanges between the second expansion bus interface 214 and the third expansion bus interfaces 222_1 and 222_2, the power wire does not have effects on signal transmissions. Consequently, the present embodiment uses a single wire (that is, a power wire of USB) in the third expansion bus standard Pt1_3 such that a one-wire communication protocol is used between the first expansion bus interface 212 and the fourth expansion bus interfaces 226_1 and 226_2 to exchange signals on the single wire.

The so-called one-wire communication protocol indicates that a single wire is used to process transmissions of data and signals between two electronic devices. Therefore, the third peripheral devices 228_1 and 228_2 can be simpler peripheral devices. The fourth expansion bus interfaces 226_1 and 226_2 provide the third peripheral devices 228_1 and 228_1 to the mobile electronic device 10 for use via the one-wire communication protocol on the power wire of the third expansion bus standard Pt1_3.

On the other hand, in the first expansion device 210, the first expansion bus interface 212 is coupled to the power wire of the third expansion bus standard Pt1_3 via the GPIO port of the first expansion bus interface 212 so as to transmit signals that conforms to the one-wire communication protocol. In addition, the first expansion bus interface 212 further converts received signals and uses the second expansion bus standard Pt1_2 and the second expansion bus interface 214 to exchange signals, and the second expansion bus interface 214 is coupled to a data line and a ground wire of the third expansion bus interfaces 222_1 and 222_2 so as to exchange signals with the third expansion bus interfaces 222_1 and 222_2 by using the third expansion bus standard Pt1_3, such that the mobile electronic device 10 uses the expansion functions of the second peripheral devices 224_1 and 224_2 and the third peripheral devices 228_1 and 228_2.

In practical applications, the third peripheral devices 228_1 and 228_2 can include, respectively, transmission cue devices ALD1 and ALD2 used to cue a connection status of the expansion module 200.

For example, when one of the second expansion devices 220_1 and 220_2 and the mobile electronic device 10 process signal transmissions, the mobile electronic device 10 may control the transmission cue device (ALD1 or ALD2) of the second expansion device (220_1 or 220_2) to issue transmission cues so as to cue a user that the mobile electronic device 10 is controlling the second expansion device. During the process, the transmission cue devices ALD1 or ALD2 may issue transmission cues such as showing lights, making cue sounds or speech sounds to remind a user that the second expansion device 220_1 or 220_2 is transmitting important signals or data in order to prevent transmission errors or losses caused by the user removing the second expansion device.

The aforementioned signal transmissions can occur when the mobile electronic device 10 reads data from the second peripheral device 224_1 or 224_2 of the second expansion device 220_1 or 220_2, or when the mobile electronic device 10 writes data to the second peripheral device 224_1 or 224_2 of the second expansion device 220_1 or 220_2. The mobile electronic device 10 may control the transmission cue device ALD1 or ALD2 to stop issuing the transmission cues after the mobile electronic device 10 finishes reading or writing the data. When the transmission cue devices ALD1 and ALD2 stop issuing transmission cues, it means that it is safe for the user to remove the second expansion device.

The aforementioned signal transmissions can also occur when the mobile electronic device 10 processes a stop action, for example, a stop action conforming to the USB standard, to the second expansion device. When the mobile electronic device 10 is in the process of transmitting data, a user can also stop the data transmission of the designated second expansion device via directly controlling the transmission cue device ALD1 or ALD2 so as to remove the designated second expansion device 220_1 or 220_2.

Specifically, when the transmission cue device of the designated second expansion device receives a remove command induced by a user, the mobile electronic device 10 performs a stop action to the designated second expansion device and the other second expansion devices whose coupling orders are after that of the designated second expansion device based on the remove command so as to stop data transmissions in the designated second expansion device and the other second expansion devices whose coupling orders are after that of the designated second expansion device. The stop action can include writing data which is not yet written into the second expansion device that is about to be stopped. After the stop command is completed, the mobile electronic device 10 controls the transmission cue device ALD1 or ALD2 to stop issuing transmission cues.

For example, when the transmission cue device ALD1 of the second expansion device 220_1 receives a remove command, the mobile electronic device 10 performs a stop action to the second expansion device 220_1 and the second expansion device 220_2 whose coupling order is after that of the second expansion device 220_1 based on the remove command. When the transmission cue device ALD2 of the second expansion device 220_2 receives a remove command, the mobile electronic device 10 performs a stop action only to the second expansion device 220_2 based on the remove command. During the process, a way for a user to send a remove command to the transmission cue device ALD1 or ALD2 can be realized by pressing a preset button of the designated second expansion device, but the invention is not limited thereto.

In light of the foregoing, the expansion module of the present embodiment of the invention can use various expansion bus standards to exchange signals among a plurality of the expansion devices so as to use various expansion bus interfaces to provide corresponding peripheral devices to a mobile electronic device for use based on data transmission requirements of the peripheral devices and thereby reduce costs as a whole. The invention can also use a part of wires of the original expansion bus standard to couple to more peripheral devices so as to provide more expansion functions. Since the part of the wires does not have effects on the original expansion bus standard, the expansion device can continue using connectors of the original expansion bus standard to connect with each other.

## Claims

1. An expansion module (100, 200), providing expansion functions to a mobile electronic device (10), comprising:
a first expansion device (110, 210), wherein the first expansion device (110, 210) comprises a first expansion bus interface (112, 212), a second expansion bus interface (114, 214) and at least one first peripheral device (116, 216), the second expansion bus interface (114, 214) and the first peripheral device (116, 216) are coupled to the first expansion bus interface (112, 212), the first expansion device (110, 210) is coupled to the mobile electronic device (10) via the first expansion bus interface (112, 212), and the first expansion bus interface (112, 212) provides the first peripheral device (116, 216) to the mobile electronic device (10) for use; and
at least one second expansion device (124_2, 224_1, 224_2), wherein each of the second expansion devices (124_2, 224_1, 224_2) comprises a third expansion bus interface (122_1, 122_2, 222_1, 222_2) and at least one second peripheral device (124_2, 224_1, 224_2), the second peripheral device (124_2, 224_1, 224_2) is coupled to the third expansion bus interface (122_1, 122_2, 222_1, 222_2), the second expansion device (124_2, 224_1, 224_2) is coupled to the second expansion bus interface (114, 214) of the first expansion device (110, 210) in a daisy chain via the third expansion bus interface (122_1, 122_2, 222_1, 222_2), and the first expansion bus interface (112, 212) and the second expansion bus interface (114, 214) provide the second peripheral device (124_2, 224_1, 224_2) to the mobile electronic device (10) for use via the third expansion bus interface (122_1, 122_2, 222_1, 222_2).

2. The expansion module (100, 200) as recited in claim 1, wherein the first expansion bus interface (112, 212) and the mobile electronic device (10) use a first expansion bus standard to exchange signals, the first expansion bus interface (112, 212) and the second expansion bus interface (114, 214) use a second expansion bus standard to exchange signals, the second expansion bus interface (114, 214) and the third expansion bus interface (122_1, 122_2, 222_1, 222_2) use a third expansion bus standard to exchange signals, and a transmission rate of the first expansion bus standard is faster than a transmission rate of the third expansion bus standard.

3. The expansion module (100, 200) as recited in claim 2, wherein each of the second expansion devices (124_2, 224_1, 224_2) further comprises a fourth expansion bus interface (226_1, 226_2) and at least one third peripheral device (124_1), the third peripheral device (124_1) is coupled to the fourth expansion bus interface (226_1, 226_2), the fourth expansion bus interface (226_1, 226_2) is coupled to a general purpose input/output port (GPIO) of the first expansion bus interface (112, 212) of the first expansion device (110, 210), and the first expansion bus interface (112, 212) provides the third peripheral device (124_1) to the mobile electronic device (10) for use via the fourth expansion bus interface (226_1, 226_2).

4. The expansion module (100, 200) as recited in claim 3, wherein a part of wires of the third expansion bus standard is used between the first expansion bus interface (112, 212) and the fourth expansion bus interfaces (226_1, 226_2) to exchange signals, and the part of the wires is not used between the second expansion bus interface (114, 214) and the third expansion bus interfaces (122_1, 122_2, 222_1, 222_2).

5. The expansion module (100, 200) as recited in claim 4, wherein the part of the wires is a single wire conforming to the third expansion bus standard, and a one-wire communication protocol is used on the single wire between the first expansion bus interface (112, 212) and the fourth expansion bus interfaces (226_1, 226_2) to exchange signals.

6. The expansion module (100, 200) as recited in claim 5, wherein the single wire is a power wire conforming to the third expansion bus standard.

7. The expansion module (100, 200) as recited in claim 3, wherein the third peripheral device (124_1) of each of the second expansion devices (124_2, 224_1, 224_2) comprises a transmission cue device (ALD1, ALD2), when one of the second expansion devices (124_2, 224_1, 224_2) and the mobile electronic device (10) perform signal transmissions, the mobile electronic device (10) controls the transmission cue device (ALD1, ALD2) of the second expansion device (124_2, 224_1, 224_2) to issue a transmission cue.

8. The expansion module (100, 200) as recited in claim 7, wherein the signal transmissions occur when the mobile electronic device (10) reads data from the second peripheral device (124_2, 224_1, 224_2) of the second expansion device (124_2, 224_1, 224_2) or when the mobile electronic device (10) writes data to the second peripheral device (124_2, 224_1, 224_2) of the second expansion device (124_2, 224_1, 224_2), and the mobile electronic device (10) controls the transmission cue device (ALD1, ALD2) to stop issuing the transmission cue after the mobile electronic device (10) finishes reading or writing the data.

9. The expansion module (100, 200) as recited in claim 7, wherein when the transmission cue device (ALD1, ALD2) of the second expansion device (124_2, 224_1, 224_2) receives a remove command, the mobile electronic device (10) performs a stop action to the second expansion device (124_2, 224_1, 224_2) and the other second expansion devices (124_2, 224_1, 224_2) whose coupling orders are after that of the second expansion device (124_2, 224_1, 224_2) based on the remove command, and the signal transmissions occur when the stop action is performed, the mobile electronic device (10) controls the transmission cue device (ALD1, ALD2) to stop issuing the transmission cue after the stop action is completed.
